(19) Europäisches Patentamt / European Patent Office / Office européen des brevets

(11) **EP 4 403 432 B1**

## (12) EUROPEAN PATENT SPECIFICATION

(45) Date of publication and mention
of the grant of the patent:
**29.10.2025 Bulletin 2025/44**

(21) Application number: **23737115.8**

(22) Date of filing: **05.01.2023**

(51) International Patent Classification (IPC):
**B60W 60/00** *(2020.01)* **B60W 40/06** *(2012.01)*
**G06V 20/56** *(2022.01)*

(52) Cooperative Patent Classification (CPC):
**B60W 40/06; B60W 30/143; B60W 60/00;
G06V 20/588**

(86) International application number:
**PCT/CN2023/070767**

(87) International publication number:
**WO 2023/131253 (13.07.2023 Gazette 2023/28)**

(54) **AUTONOMOUS DRIVING METHOD AND SYSTEM CAPABLE OF RECOGNIZING ROAD
CONDITIONS, AND VEHICLE**

AUTONOMES FAHRVERFAHREN UND SYSTEM ZUR ERKENNUNG VON
STRASSENZUSTÄNDEN SOWIE FAHRZEUG

PROCÉDÉ ET SYSTÈME DE CONDUITE AUTONOME CAPABLES DE RECONNAÎTRE DES
CONDITIONS ROUTIÈRES, ET VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.01.2022 CN 202210022492**

(43) Date of publication of application:
**24.07.2024 Bulletin 2024/30**

(73) Proprietor: **Wuhan Lotus Cars Co., Ltd
Wuhan, Hubei 430070 (CN)**

(72) Inventor: **WANG, Zhimeng
Wuhan, Hubei 430070 (CN)**

(74) Representative: **Ziebig Hengelhaupt Intellectual
Property Attorneys
Patentanwaltskanzlei PartGmbB
Leipziger Straße 49
10117 Berlin (DE)**

(56) References cited:
WO-A1-2018/030010     WO-A1-2021/118809
WO-A1-2021/118809     CN-A- 101 719 316
CN-A- 108 960 060     CN-A- 109 564 682
CN-A- 110 832 281     CN-A- 113 200 052
CN-A- 114 261 408     CN-U- 201 657 198
DE-A1- 102016 208 370  DE-A1- 102020 201 420
US-A1- 2020 250 984    US-A1- 2020 250 984

• WU JIAN ET AL: "Ride Comfort Optimization via
Speed Planning and Preview Semi-Active
Suspension Control for Autonomous Vehicles on
Uneven Roads", IEEE TRANSACTIONS ON
VEHICULAR TECHNOLOGY, IEEE, USA, vol. 69,
no. 8, 22 May 2020 (2020-05-22), pages 8343 -
8355, XP011804349, ISSN: 0018-9545, [retrieved
on 20200813], DOI: 10.1109/TVT.2020.2996681

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

## FIELD OF THE INVENTION

The present invention relates to the field of autonomous driving of automobiles, and particularly to an autonomous driving method and system capable of recognizing road conditions, and a vehicle.

## BACKGROUND OF THE INVENTION

A current autonomous driving control system mainly performs longitudinal control for traffic participants, such as front vehicles and pedestrians, and obstacles with collision risks, but some objects, such as short road surface obstacles (such as speed bumps and pits) without collision risks and bumpy road surfaces, are not within the longitudinal control scope of the current autonomous driving, and when an autonomous driving system drives over the obstacles at a high speed, since the system does not perform control for the obstacles, the vehicle may bump greatly, thus influencing comfort of passengers and possibly causing faults, such as aggravated abrasion of tires and a suspension. The following prior art is acknowledged:
WU JIAN ET AL: "Ride Comfort Optimization via Speed Planning and Preview Semi-Active Suspension Control for Autonomous Vehicles on Uneven Roads", IEEE TRANSACTIONS ON VEHICULAR TECHNOLOGY, IEEE, USA, vol. 69, no. 8, 22 May 2020 (2020-05-22), pages 8343-8355, XP011804349, ISSN: 0018-9545, DOI: 10.1109/TVT.2020.2996681 [retrieved on 2020-08-13]

## BRIEF DESCRIPTION OF THE INVENTION

An object of the present invention is to provide an autonomous driving method capable of recognizing road conditions which is used for calculating a road surface condition in front of a vehicle and controlling the vehicle to pass through a front region at a most appropriate speed, according to the appended claims.
A further object of the present invention is to improve comfort of an autonomous driving vehicle when the vehicle passes through the above-mentioned road surface and obstacles.
Another object of the present invention is to reduce vehicle use faults caused by road surface irregularity.
Particularly, the present invention provides an autonomous driving method capable of recognizing road conditions, including:

dividing a road surface in front of a vehicle into regions, and performing gridding subdivision on the regions;
calculating road surface unevenness in gridding-subdivided grid units in each of the regions;

determining road surface unevenness of each region according to an influence weight of the region, an average height variance in the region, and the road surface unevenness of all grid units corresponding to the region, the influence weight being determined according to a distance between the region and the vehicle;
determining a vehicle speed corresponding to the road surface unevenness of each region according to the road surface unevenness of the region; and
controlling the vehicle to pass through the road surface of the corresponding regions in front of the vehicle at the corresponding vehicle speeds.

Preferably, the calculating road surface unevenness in gridding-subdivided grid units in each of the regions includes:

acquiring a maximum levelness value $h_{jmax}$ and a minimum levelness value $h_{jmin}$ in a jth grid unit of a certain region, the maximum levelness value $h_{jmax}$ being a largest height difference between a convex road surface in the jth grid unit and a horizontal plane, and the minimum levelness value $h_{jmin}$ being a largest height difference between a concave road surface in the jth grid unit and the horizontal plane;
determining the influence weight $k_j$ of the jth grid unit according to a position relationship between the jth grid unit and the vehicle; and
calculating the road surface unevenness $M_j$ in the jth grid unit of the region according to

$$M_j = k_j \left( \left| h_{jmax} \right| + \left| h_{jmin} \right| \right)$$

Preferably, in the step of determining road surface unevenness of each region according to an influence weight, an average height variance in the region, and the road surface unevenness of all grid units corresponding to the region, the influence weight being determined according to a distance between the region and the vehicle, the road surface unevenness $y_n$ of an nth region is calculated according to the following formula:

$$y_n = \sum_{i=1}^{j} M_j + k_n * v$$

wherein parameter $k_n$ represents the influence weight of the nth region, and parameter $V$ represents the average height variance of the nth region.
Preferably, the determining a vehicle speed corresponding to the road surface unevenness of each region according to the road surface unevenness of the region includes:

determining an unevenness grade of each region according to the road surface unevenness of the region; and

inquiring a mapping relationship table for representing the unevenness grade of each region and the vehicle speed at which the vehicle is about to drive according to the unevenness grade of each region, and determining the corresponding vehicle speed when the vehicle passes through each region.

Preferably, the higher the unevenness grade, the more uneven the road surface in front of the vehicle, and the lower the speed of passing the grade.

The present invention discloses an autonomous driving system capable of recognizing road conditions, including:

a detection module, a data processing module and a vehicle control module, wherein the data processing module is configured to process data sent by the detection module and send a data processing result to the vehicle control module, and the vehicle control module is configured to implement the above-mentioned autonomous driving method capable of recognizing road conditions.

Preferably, the detection module includes an out-of-vehicle detection module and an in-vehicle detection module, the out-of-vehicle detection module is configured to acquire a maximum levelness value $h_{jmax}$ and a minimum levelness value $h_{jmin}$ in a jth grid unit in a certain region, and the in-vehicle detection module is configured to acquire information of a driver and passengers of a vehicle for optimizing influence weights $k_j$ and $k_n$.

The present invention further discloses a vehicle including the above-mentioned autonomous driving system. capable of recognizing road conditions

In the present invention, a road in front of the vehicle is divided into regions, gridding subdivision is then performed on each region, and the road surface unevenness of each grid is calculated, such that road surface unevenness information in the region is obtained, thereby controlling the vehicle to pass through the front region at a most appropriate speed.

Further, in the present invention, the unevenness of different regions is graded, and the passing speed most suitable for the grade is specified, thereby improving the comfort of the driving vehicle when the vehicle passes through the road surface and the obstacles.

As a further object of the present invention, by planning the passing speeds in different regions, the action of scratching a chassis when the vehicle runs on different road surfaces is prevented, thereby reducing the vehicle use faults caused by the uneven road surfaces.

According to the following detailed description of specific embodiments of the present invention in conjunction with drawings, those skilled in the art will better understand the aforementioned and other objects, advantages and features of the present invention.

## BRIEF DESCRIPTION OF THE DRAWINGS

Some specific embodiments of the present invention will be described below in detail in an exemplary rather than restrictive manner with reference to the drawings. Identical reference numerals in the drawings represent identical or similar components or parts. Those skilled in the art should understand that these drawings are not necessarily drawn to scale. In the drawings:

Fig. 1 is a control flow chart of an autonomous driving method according to an embodiment of the present invention; and

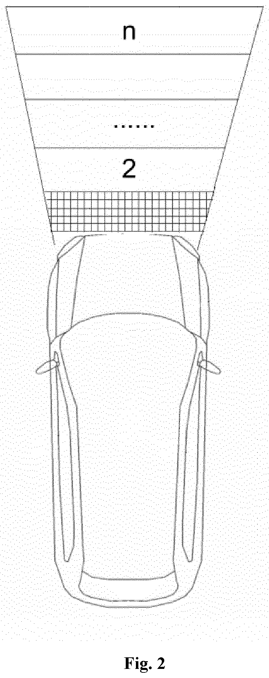

Fig. 2 is a schematic diagram of division of regions in front of a vehicle in an embodiment of the present invention.

## DETAILED DESCRIPTION

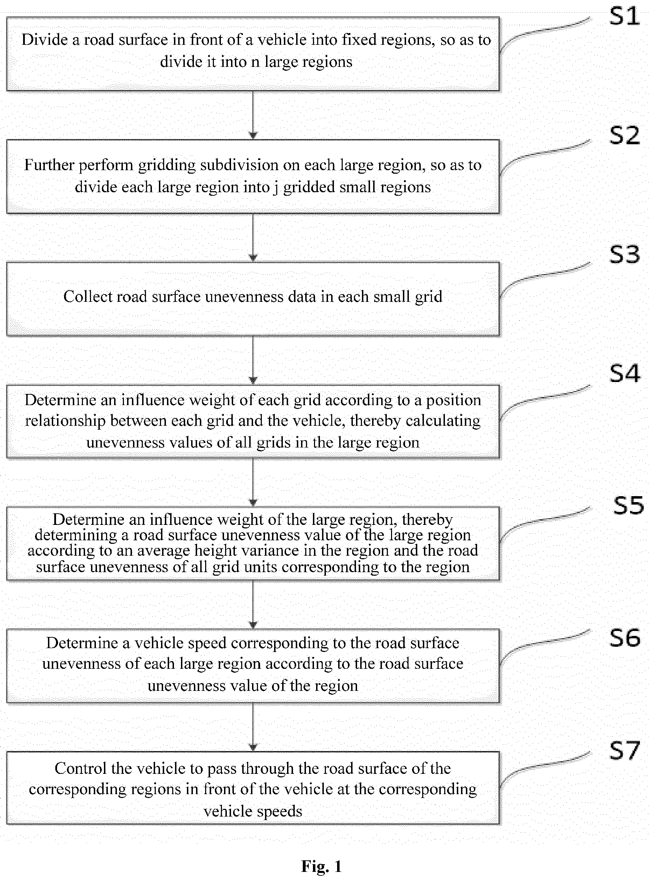

Fig. 1 is a control flow chart of an autonomous driving method according to an embodiment of the present invention. In an embodiment, as shown in Fig. 1, an autonomous driving method capable of recognizing road conditions mainly includes:

S1: dividing a road surface in front of a vehicle into fixed regions, so as to divide the road surface ahead into n large regions in an equidistant dividing mode;

S2: further performing gridding subdivision on each large region, so as to divide each large region into j gridded square regions in an equidistant mode;

S3: collecting road surface unevenness data in each small grid by a vehicle detection module, and performing calculation on the collected data to obtain unevenness information of the grid;

S4: determining an influence weight of each grid according to a position relationship between each grid and the vehicle, thereby calculating unevenness information of all grids in the large region;

S5: determining an influence weight of the large region according to a distance between the large region and the vehicle, thereby determining road surface unevenness information of the large region according to an average height variance in the region and the road surface unevenness of all grid units corresponding to the region;

S6: determining a vehicle speed corresponding to the road surface unevenness of each large region according to the road surface unevenness information of the region; and

S7: controlling the vehicle to pass through the road surface of the corresponding regions in front of the vehicle at the corresponding vehicle speeds.

Further, a maximum levelness value $h_{jmax}$ and a minimum levelness value $h_{jmin}$ in a jth grid unit in a target large region are acquired, the maximum levelness value $h_{jmax}$ being a largest height difference between a convex road surface in the jth grid unit and a horizontal plane, and the minimum levelness value $h_{jmin}$ being a largest height difference between a concave road surface in the jth grid unit and the horizontal plane; the influence weight $k_j$ of the jth grid unit is determined according to a position relationship between the jth grid unit and the vehicle; and the road surface unevenness $M_j$ in the jth grid unit of the region is calculated according to $M_j = k_j(|h_{jmax}| + |h_{jmin}|)$.

Unevenness values $M_j$ of all grids in the region are calculated, the influence weight $k_n$ of the region in the region is determined according to the distance between the region and the vehicle, and the average height variance V in the region is determined, the unevenness information $y_n$ of the region is further calculated according to

$$y_n = \Sigma_{i=1}^{j} M_j + k_n * v$$

, a passing vehicle speed value corresponding to the region $y_n$ is further inquired through a mapping relationship table of an unevenness grade of each region and the vehicle speed at which the vehicle is about to drive according to the unevenness information $y_n$ of each large region, the vehicle speed value is fed back to an execution mechanism, and the execution mechanism controls the vehicle to pass through the region at a target vehicle speed.

In the present embodiment, a road in front of the vehicle is divided into regions, gridding subdivision is then performed on each region, and the road surface unevenness of each grid is calculated, such that the road surface unevenness information in the region is obtained, thereby controlling the vehicle to pass through the front region at a most appropriate speed, and further improving comfort of the driving vehicle when the vehicle passes through the road surface and obstacles; the action of scratching a chassis when the vehicle runs on different road surfaces is prevented, thereby reducing vehicle use faults caused by the uneven road surfaces.

In one embodiment, the higher the unevenness grade of the vehicle, the more uneven the road surface in front of the vehicle, and the lower the vehicle speed at which the vehicle passes through the region; meanwhile, the passing speed of the vehicle is also related to information of a driver and passengers in the vehicle, and when an in-vehicle detector detects that there are the elder, children or pregnant women in the vehicle, the influence weights $k_j$ and $k_n$ in the vehicle calculation can be subjected to data optimization according to relevant proportions, such that the driver and passengers have better driving and taking experience.

The present invention discloses an autonomous driving system capable of recognizing road conditions, including a detection module, a data processing module and a vehicle control module, wherein the detection module is configured to collect information of a driver and passengers in a vehicle and road conditions outside the vehicle, i.e., bulges and pits of a road in front of the vehicle and a distance between a road section and the vehicle, and transmit the collected data to the data processing module, the data processing module performs calculation on the transmitted data according to the above-mentioned calculation method and sends a final result to the vehicle control module, and the vehicle control module controls the vehicle to pass through a target region at a preset vehicle speed after receiving the data.

The detection module includes an in-vehicle detection module and an out-of-vehicle detection module, the out-of-vehicle detection module is configured to detect information of the road in front of the vehicle, and the in-vehicle detection module is configured to detect information of a driver and passengers in the vehicle, judge whether the driver and passengers in the vehicle include the elder, children or pregnant women, and then judge whether influence weights $k_j$ and $k_n$ of the vehicle are required to be subjected to data optimization.

The present invention further discloses a vehicle including the above-mentioned autonomous driving system capable of recognizing road conditions.

So far, those skilled in the art should be aware that, although plural exemplary embodiments of the present invention have been shown and described herein in detail, a lot of other variations or modifications conforming to the principle of the present invention can still be directly determined or derived from the contents disclosed in the present invention without departing from the scope of the present invention. Therefore, the scope of the present invention should be understood and deemed as covering all of these other variations or modifications, within the scope of the appended claims.

**Claims**

1. An autonomous driving method capable of recognizing road conditions, comprising:

> dividing a road surface in front of a vehicle into regions, and performing gridding subdivision on the regions;
> calculating road surface unevenness in gridding-subdivided grid units in each of the regions;
> determining road surface unevenness of each region using an influence weight of the region, an average height variance in the region, and the road surface unevenness of all grid units corresponding to the region, the influence weight being determined using a distance between the region and the vehicle;
> determining a vehicle speed corresponding to the road surface unevenness of each region using the road surface unevenness of the region; and
> controlling the vehicle to pass through the road surface of the corresponding regions in front of the vehicle at the corresponding vehicle speeds.

2. The autonomous driving method according to claim 1, wherein the calculating road surface unevenness in gridding-subdivided grid units in each of the regions comprises:

acquiring a maximum levelness value $h_{jmax}$ and a minimum levelness value $h_{jmin}$ in a jth grid unit of a certain region, the maximum levelness value $h_{jmax}$ being a largest height difference between a convex road surface in the jth grid unit and a horizontal plane, and the minimum levelness value $h_{jmin}$ being a largest height difference between a concave road surface in the jth grid unit and the horizontal plane;
determining the influence weight $k_j$ of the jth grid unit using a position relationship between the jth grid unit and the vehicle; and
calculating the road surface unevenness $M_j$ in the jth grid unit of the region using $M_j = k_j(|h_{jmax}| + |h_{jmin}|)$.

3. The autonomous driving method according to claim 2, wherein in the step of determining road surface unevenness of each region using an influence weight, an average height variance in the region, and the road surface unevenness of all grid units corresponding to the region, the influence weight being determined using a distance between the region and the vehicle, the road surface unevenness $y_n$ of an nth region is calculated using the following formula:

$$ y_n = \sum_{i=1}^{j} M_j + k_n * v $$

wherein parameter $k_n$ represents the influence weight of the nth region, and parameter V represents the average height variance of the nth region.

4. The autonomous driving method according to any one of claims 1 to 3, wherein the determining a vehicle speed corresponding to the road surface unevenness of each region using the road surface unevenness of the region comprises:

determining an unevenness grade of each region using the road surface unevenness of the region; and
inquiring a mapping relationship table for representing the unevenness grade of each region and the vehicle speed at which the vehicle is about to drive using the unevenness grade of each region, and determining the corresponding vehicle speed when the vehicle passes through each region.

5. The autonomous driving method according to claim 4, wherein the higher the unevenness grade, the more uneven the road surface in front of the vehicle, and the lower the speed of passing the region of the grade.

6. An autonomous driving system capable of recognizing road conditions, comprising:
a detection module, a data processing module and a vehicle control module, wherein the data processing module is configured to process data sent by the detection module and send a data processing result to the vehicle control module, and the vehicle control module is configured to implement the autonomous driving method capable of recognizing road conditions according to any one of claims 1 to 5.

7. The autonomous driving system according to claim 6, wherein the detection module comprises an out-of-vehicle detection module and an in-vehicle detection module, the out-of-vehicle detection module is configured to acquire a maximum levelness value $h_{jmax}$ and a minimum levelness value $h_{jmin}$ in a jth grid unit in a certain region, and the in-vehicle detection module is configured to acquire information of a driver and passengers of a vehicle for optimizing influence weights $k_j$ and $k_n$.

8. A vehicle comprising the autonomous driving system capable of recognizing road conditions according to claim 6 or 7.

**Patentansprüche**

1. Autonomes Fahrverfahren zur Erkennung von Straßenzuständen, umfassend:

Teilen einer Straßenoberfläche vor einem Fahrzeug in Bereiche und Durchführen einer Rasterunterteilung an den Bereichen;
Berechnen einer Straßenoberflächenunebenheit in rasterunterteilten Rastereinheiten in jedem der Bereiche;
Bestimmen einer Straßenoberflächenunebenheit jedes Bereichs unter Verwendung eines Einflussgewichts des Bereichs, einer durchschnittlichen Höhenvarianz in dem Bereich und der Straßenoberflächenunebenheit aller Rastereinheiten, die dem Bereich entsprechen, wobei das Einflussgewicht unter Verwendung einer Entfernung zwischen dem Bereich und dem Fahrzeug bestimmt wird;
Bestimmen einer Fahrzeuggeschwindigkeit, die der Straßenoberflächenunebenheit des jeweiligen Bereichs entspricht, unter Verwendung der Straßenoberflächenunebenheit des Bereichs; und

Steuern des Fahrzeugs, um die Straßenoberfläche der entsprechenden Bereiche vor dem Fahrzeug mit der entsprechenden Fahrzeuggeschwindigkeit zu durchfahren.

2. Autonomes Fahrverfahren nach Anspruch 1, wobei das Berechnen der Straßenoberflächenunebenheit in rasterunterteilten Rastereinheiten in jedem der Bereiche umfasst:

Beziehen eines maximalen Ebenheitswerts $h_{jmax}$ und eines minimalen Ebenheitswerts $h_{jmin}$ in einer j-ten Rastereinheit eines bestimmten Bereichs, wobei der maximale Ebenheitswert $h_{jmax}$ eine größte Höhendifferenz zwischen einer konvexen Straßenoberfläche in der j-ten Rastereinheit und einer horizontalen Ebene ist und der minimale Ebenheitswert $h_{jmin}$ eine größte Höhendifferenz zwischen einer konkaven Straßenoberfläche in der j-ten Rastereinheit und der horizontalen Ebene ist;
Bestimmen des Einflussgewichts $k_j$ der j-ten Rastereinheit unter Verwendung einer Positionsbeziehung zwischen der j-ten Rastereinheit und dem Fahrzeug; und
Berechnen der Straßenoberflächenunebenheit $M_j$ in der j-ten Rastereinheit des Bereichs unter Verwendung von $M_j = k_j \, (|h_{jmax}| + |h_{jmin}|)$.

3. Autonomes Fahrverfahren nach Anspruch 2, wobei in dem Schritt des Bestimmens der Straßenoberflächenunebenheit jedes Bereichs unter Verwendung eines Einflussgewichts, einer durchschnittlichen Höhenvarianz in dem Bereich und der Straßenoberflächenunebenheit aller Rastereinheiten, die dem Bereich entsprechen, wobei das Einflussgewicht unter Verwendung einer Entfernung zwischen dem Bereich und dem Fahrzeug bestimmt wird, die Straßenoberflächenunebenheit $y_n$ eines n-ten Bereichs unter Verwendung der folgenden Gleichung berechnet wird:

$$y_n = \sum_{i=1}^{j} M_j + k_n * v$$

wobei der Parameter $k_n$ das Einflussgewicht des n-ten Bereichs darstellt und der Parameter v die durchschnittliche Höhenvarianz des n-ten Bereichs darstellt.

4. Autonomes Fahrverfahren nach einem der Ansprüche 1 bis 3, wobei das Bestimmen einer Fahrzeuggeschwindigkeit, die der Straßenoberflächenunebenheit des jeweiligen Bereichs entspricht, unter Verwendung der Straßenoberflächenunebenheit des Bereichs umfasst:

Bestimmen eines Unebenheitswerts des jeweiligen Bereichs unter Verwendung der Straßenoberflächenunebenheit des Bereichs; und
Nachschlagen in einer Zuordnungsbeziehungstabelle, welche den Unebenheitswert jedes Bereichs und die Fahrzeuggeschwindigkeit, bei der das Fahrzeug im Begriff ist zu fahren, darstellt, unter Verwendung des Unebenheitswerts des jeweiligen Bereichs und Bestimmen der entsprechenden Fahrzeuggeschwindigkeit, wenn das Fahrzeug den Bereich durchfährt.

5. Autonomes Fahrverfahren nach Anspruch 4, wobei je höher der Unebenheitswert, desto unebener die Straßenoberfläche vor dem Fahrzeug und desto niedriger die Geschwindigkeit des Durchfahrens des Bereichs mit dem Wert.

6. Autonomes Fahrsystem zur Erkennung von Straßenzuständen, aufweisend:
ein Erfassungsmodul, ein Datenverarbeitungsmodul und ein Fahrzeugsteuerungsmodul, wobei das Datenverarbeitungsmodul dazu eingerichtet ist, Daten zu verarbeiten, die von dem Erfassungsmodul gesendet werden, und ein Datenverarbeitungsergebnis an das Fahrzeugsteuerungsmodul zu senden, und das Fahrzeugsteuerungsmodul dazu eingerichtet ist, das autonome Fahrverfahren zur Erkennung von Straßenzuständen nach einem der Ansprüche 1 bis 5 umzusetzen.

7. Autonomes Fahrsystem nach Anspruch 6, wobei das Erfassungsmodul ein fahrzeugexternes Erfassungsmodul und ein fahrzeuginternes Erfassungsmodul umfasst, das fahrzeugexterne Erfassungsmodul dazu eingerichtet ist, einen maximalen Ebenheitswert $h_{jmax}$ und einen minimalen Ebenheitswert $h_{jmin}$ in einer j-ten Rastereinheit in einem bestimmten Bereich zu beziehen, und das fahrzeuginterne Erfassungsmodul dazu eingerichtet ist, Informationen eines Fahrers und von Passagieren eines Fahrzeugs zur Optimierung der Einflussgewichte $k_j$ und $k_n$ zu beziehen.

8. Fahrzeug mit dem autonomen Fahrsystem zur Erkennung von Straßenzuständen nach Anspruch 6 oder 7.

**Revendications**

1. Procédé de conduite autonome capable de reconnaître les conditions routières, comprenant:

la division de la surface d'une route devant un véhicule en régions, et la réalisation d'une subdivision en quadrillage sur les régions;

le calcul de l'irrégularité de la surface de la route dans des unités de grille subdivisées par quadrillage dans chacune des régions;

la détermination de l'irrégularité de la surface de la route de chaque région en utilisant un poids d'influence de la région, une variance de hauteur moyenne dans la région et l'irrégularité de la surface de la route de toutes les unités de grille correspondant à la région, le poids d'influence étant déterminé en utilisant une distance entre la région et le véhicule;

la détermination d'une vitesse de véhicule correspondant à l'irrégularité de la surface de la route de chaque région en utilisant l'irrégularité de la route de la région; et

le contrôle du véhicule afin qu'il traverse la surface de la route des régions correspondantes devant le véhicule à des vitesses correspondantes du véhicule.

2. Procédé de conduite autonome selon la revendication 1, dans lequel le calcul de l'irrégularité de la surface de la route dans des unités de grille subdivisées par quadrillage dans chacune des régions comprend:

l'acquisition d'une valeur de planéité maximale $h_{jmax}$ et d'une valeur de planéité minimale $h_{jmin}$ dans une j-ième unité de grille d'une certaine région, la valeur de planéité maximale $h_{jmax}$ étant une plus grande différence de hauteur entre une surface de route convexe dans la j-ième unité de grille et un plan horizontal, et la valeur de planéité minimale $h_{jmin}$ étant une plus grande différence de hauteur entre une surface de route concave dans la j-ième unité de grille et le plan horizontal;

la détermination du poids d'influence $k_j$ de la j-ième unité de grille en utilisant une relation de position entre la j-ième unité de grille et le véhicule; et

le calcul de l'irrégularité de la surface de la route $M_j$ dans la j-ième unité de grille de la région en utilisant

$$M_j = k_j \left( \left| h_{jmax} \right| + \left| h_{jmin} \right| \right).$$

3. Procédé de conduite autonome selon la revendication 2, dans lequel l'étape de détermination de l'irrégularité de la surface de la route de chaque région en utilisant un poids d'influence, une variance de hauteur moyenne dans la région, et l'irrégularité de la surface de la route de toutes les unités de grille correspondant à la région, le poids d'influence étant déterminé en utilisant une distance entre la région et le véhicule, l'irrégularité de la surface de la route $y_n$ d'une n-ième région est calculée en utilisant la formule suivante:

$$y_n = \sum_{i=1}^{j} M_j + k_n * v$$

dans lequel le paramètre $k_n$ représente le poids d'influence de la n-ième région, et le paramètre V représente la variance de hauteur moyenne de la n-ième région.

4. Procédé de conduite autonome selon l'une quelconque des revendications 1 à 3, dans lequel la détermination d'une vitesse de véhicule correspondant à l'irrégularité de la surface de la route de chaque région en utilisant l'irrégularité de la surface de la route de la région comprend:

la détermination d'un niveau d'irrégularité de chaque région en utilisant l'irrégularité de la surface de la route de la région; et

la recherche d'une table de relations de mappage pour représenter le niveau d'irrégularité de chaque région et la vitesse de véhicule à laquelle le véhicule est sur le point de rouler en utilisant le niveau d'irrégularité de chaque région, et la détermination de la vitesse correspondante du véhicule lorsque le véhicule traverse chaque région.

5. Procédé de conduite autonome selon la revendication 4, dans lequel plus le niveau d'irrégularité est élevé, plus la surface de la route devant le véhicule est irrégulière, et plus la vitesse de passage de la région du niveau est faible.

6. Système de conduite autonome capable de reconnaître les conditions routières, comprenant: un module de détection, un module de traitement de données et un module de commande de véhicule, dans lequel le module de traitement de données est configuré pour traiter les données envoyées par le module de détection et envoyer un résultat de traitement de données au module de commande de véhicule, et le module de commande de véhicule est configuré pour mettre en œuvre le procédé de conduite autonome capable de reconnaître les conditions routières selon l'une quelconque des revendications 1 à 5.

7. Système de conduite autonome selon la revendication 6, dans lequel le module de détection comprend un module de détection hors véhicule et un module de détection dans le véhicule, le module de détection hors véhicule est configuré pour acquérir une valeur de planéité maximale $h_{jmax}$ et une valeur de planéité minimale $h_{jmin}$ dans une j-ième unité de grille dans une certaine région, et le module de détection dans le véhicule est configuré pour acquérir des informations sur le conducteur et les passagers d'un véhicule afin d'optimiser les poids d'influence $k_j$ et $k_n$.

8. Véhicule comprenant le système de conduite autonome capable de reconnaître les conditions routières selon la revendication 6 ou 7.

Divide a road surface in front of a vehicle into fixed regions, so as to divide it into n large regions

S1

Further perform gridding subdivision on each large region, so as to divide each large region into j gridded small regions

S2

Collect road surface unevenness data in each small grid

S3

Determine an influence weight of each grid according to a position relationship between each grid and the vehicle, thereby calculating unevenness values of all grids in the large region

S4

Determine an influence weight of the large region, thereby determining a road surface unevenness value of the large region according to an average height variance in the region and the road surface unevenness of all grid units corresponding to the region

S5

Determine a vehicle speed corresponding to the road surface unevenness of each large region according to the road surface unevenness value of the region

S6

Control the vehicle to pass through the road surface of the corresponding regions in front of the vehicle at the corresponding vehicle speeds

S7

Fig. 1

**Fig. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Ride Comfort Optimization via Speed Planning and Preview Semi-Active Suspension Control for Autonomous Vehicles on Uneven Roads. **WU JIAN et al.** IEEE TRANSACTIONS ON VEHICULAR TECHNOLOGY. IEEE, 22 May 2020, vol. 69, 8343-8355